# EUROPEAN PATENT APPLICATION

(11) **EP 1 684 152 A1**
(43) Date of publication of application: **26.07.2006**
(21) Application number: 05100308.5
(22) Date of filing: 19.01.2005
(51) Int. Cl.: G06F 1/00, G06F 12/14

(54) **Method and architecture for restricting access to a memory device**

(71) Applicant: STMicroelectronics S.r.l., 20041 Agrate Brianza (Milano) (IT); STMicroelectronics (Research & Development) Limited, Marlow, Buckinghamshire SL7 1YL (GB)
(72) Inventor: Pipitone, Francesco, 90129, Palermo (PA) (IT); Tomaiuolo, Francesco, 61037, Monte S. Angelo (FG) (IT); Messina, Marco, 96011, Augusta (SR) (IT); Raimondo, Alessandro, 90013, Castelbuano (PA) (IT); Malhi, Vijay, 95020, Cannizaro (CT) (IT)
(74) Representative: Maccalli, Marco

(57) **Abstract**

A memory device (102) including at least one storage area (108) for storing data and a protection control structure (234) adapted to selectively allow an external device (104) access to the at least one storage area of the memory, the storage area being not freely accessible by the external device if protected. The memory device further includes a control logic (205,228) adapted to identify an access request by the external device to the at least one storage area and cooperating with the protection control structure for managing an unlock procedure for selectively granting the external device at least temporary access rights to the storage area if protected. The memory device further includes means for providing a first code *(RND)* to the external device in said unlock procedure, means for receiving a second code from the external device in response to said first code, and means for verifying (240,229) validity of the received second code, wherein said means for verifying validity are adapted to ascertain a correspondence of the second code with the first code based on a predetermined relationship. Said control logic instructs the protection control structure to grant access to the storage area if the validity of the received second code has been verified.

## Description

The present invention relates to the field of integrated circuits, and more specifically to semiconductor memories.

In the field of semiconductor memories, Flash memories have become rather popular, because they combine the capability of storing relatively large amounts of data with the possibility of modifying their content directly on the field.

Flash memories are for example used to store the code to be executed by data processing units (e.g., microcontrollers, microprocessors, coprocessors, digital signal processors and the like) in a variety of electronic apparatuses, such as personal computers, mobile phones, digital cameras, set-top boxes for cable or satellite or digital terrestrial television, just to mention a few.

In particular, using Flash memories it is possible to modify the stored code without having to remove the memory component from the respective socket. It has thus become possible to, e.g., change the code, fix code bugs, update the code version directly at the premises of the users; the new code can be for example downloaded over the Internet, or received directly by the mobile phone from the service provider company.

There are applications in which these possibilities offered by Flash memories raise problems of security. Electronic piracy acts may for example cause the code stored in the memory to be read without authorization or to be corrupted.

Referring to a conventional Flash memory, the modification of the data stored in the memory is related to the erase and program operations. Stored data can be shielded from undesired read, erase and program operations by means of particular protection arrangements, that allow to selectively protect/unprotect distinct sectors of the memory. For example, the US patent 5,974,500 describes a non-volatile memory device comprising a set of first access control bits to control the access authorization (to perform the operations of erasing, programming and reading) to the memory array, and a set of second control bits to control write access to the first access control bits, in such a way to consent the changing of the memory access authorization. Every time the external devices request an access operation to the memory, they must provide their access authorization thereto. In fact, according to this solution, to access a protected memory zone, it is necessary to change the memory access authorization; however, this change is performed without any particular security protocol, simply by issuing, on the part of the external device, a request to modify the access authorization; there is no control on which device is requesting to change the access authorization scheme.

In view of the state of the art outlined in the foregoing, the Applicant has faced the general problem of how to implement security in a semiconductor memory, and particularly in respect of aspects relating to the grant of access authorization to external devices in an efficient way, assuring a high level of security.

According to an aspect of the present invention, a memory device as set forth in appended claim 1 is provided.

The memory device includes at least one storage area for storing data, and a protection control structure adapted to selectively allow an external device access to the at least one storage area of the memory. Said storage area is not freely accessible by the external device if protected. The memory device further includes a control logic adapted to identify an access request by the external device to the at least one storage area and cooperating with the protection control structure for managing an unlock procedure for selectively granting the external device at least temporary access rights to the storage area if protected. The memory device further includes means for providing a first code to the external device in said unlock procedure, means for receiving a second code from the external device in response to said first code, and means for verifying validity of the received second code. Said means for verifying validity are adapted to ascertain a correspondence of the second code with the first code based on a predetermined relationship. Said control logic instructs the protection control structure to grant access to the storage area if the validity of the received second code has been verified.

According to another aspect of the present invention, an access protocol as set forth in claim 12 is provided.

The access protocol to allow access to a memory device by an external device, includes receiving at the memory device an access request to a selected storage area by the external device. The access protocol further includes, in case the selected storage area is not a freely accessible area, performing an unlock procedure. Said unlock procedure includes the memory issuing to the external device a first code, at the external device, receiving the first code and, responsive thereto, sending to the memory device a second code depending on the first code. The unlock procedure further includes, at the memory device, at least temporarily unlocking the selected storage area to allow access thereto by the external device based on the received second code.

Other aspects of the present invention regard an electronic device adapted to interact with a memory device of the previous aspect, and an electronic system including such a memory device and electronic device.

Further features and advantages of the present invention will be made clear by the following detailed description of a preferred embodiment thereof, provided purely by way of a non-limitative example, with reference to the attached drawings, wherein:
Figure 1 schematically shows a diagram illustrating a dialoguing sequence between a memory device and an external device, e.g. a microprocessor, according to an embodiment of the present invention;
Figure 2 schematically illustrates a functional block view of the memory device of Figure 1, according to an embodiment of the present invention;
Figure 3 shows a simplified circuital schematic of a data output block of the memory device illustrated in Figure 2, according to an embodiment of the present invention; and
Figure 4 schematically shows an exemplary application of the present invention.

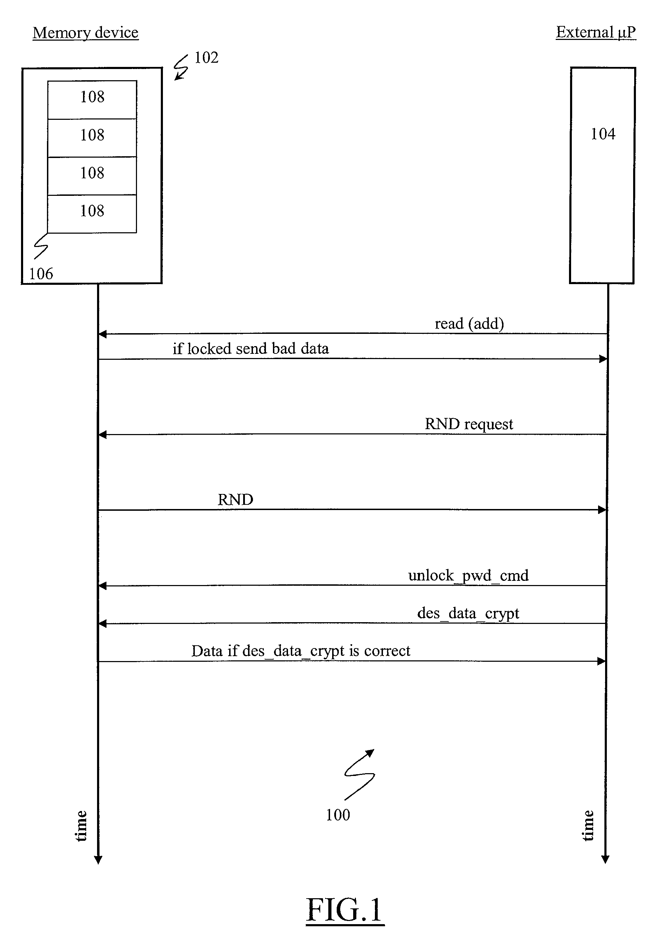

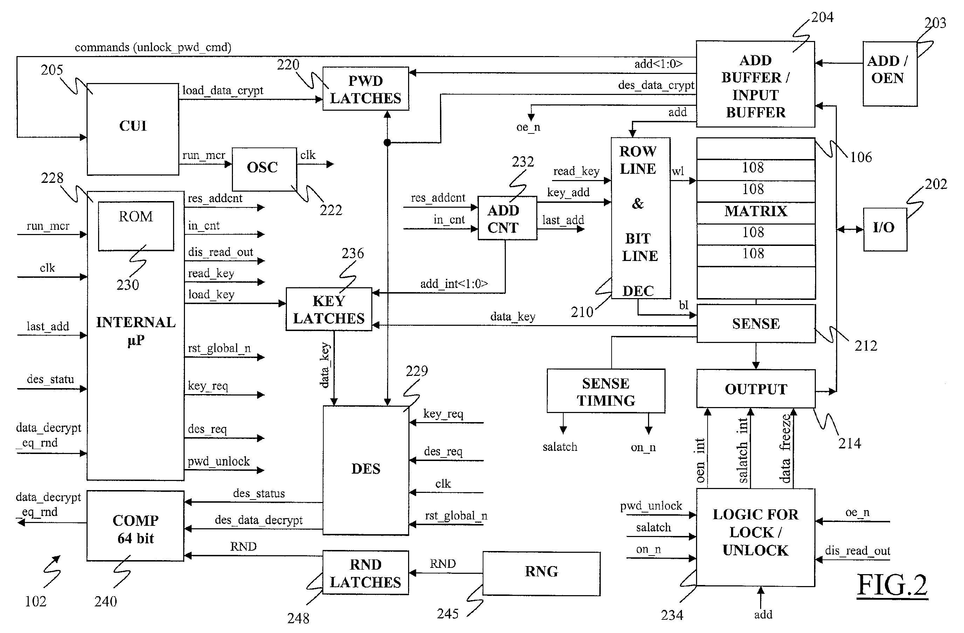

With reference to the drawings, Figure 1 is a diagram that illustrates a simplified dialoguing sequence 100 between a memory device 102 implementing an access protocol scheme according to an embodiment of the present invention, and a device, in the example a microprocessor 104 external to the memory device. The memory device 102 includes a memory matrix 106 of memory cells (forming the storage area of the memory) and several devices necessary to its functioning, that are not shown in Figure 1, being either known *per* se or described later on in connection with Figure 2. The memory matrix 106 is divided in a plurality of n memory zones 108, each one including a corresponding plurality of memory cells. The external microprocessor 104 is meant to represent whichever electronic system intended and adapted to interact with the memory device. The external microprocessor 104 may for example control the memory device 102 in such a way to require the reading of particular data stored in select groups of memory cells thereof. More particularly, the dialoguing sequence 100 illustrated in the figure relates to a case wherein an address of the memory cells that are to be accessed by the external microprocessor 104 for reading the stored content corresponds, i.e. falls in a range of addresses corresponding to a "protected" memory zone 108 of the memory matrix 106. By protected memory zone there is intended a zone of the storage area of the memory device 102 that is not freely accessible by, e.g., external devices; in particular, the dialoguing sequence 100 includes a sequence of operations adapted to "unlock" the (protected zone of the) memory device, said unlock operation sequence being necessary to enable the external microprocessor 104 obtain the right of accessing in reading the addressed memory cells belonging to the protected memory zone 108.

Quite schematically, the external microprocessor 104 executes a *read(add)* operation on the memory device 102 for requesting the memory device 102 to read the content of the memory cells of the memory matrix 106 corresponding to the address add.

Let it be assumed that the address add provided by the external microprocessor 104 corresponds to a protected memory zone 108 of the memory matrix 106, i.e., according to the definition given above, a memory zone that is not freely accessible. The memory device 102 denies the reading access to the external microprocessor 104, and wrong data are for example provided (the microprocessor can recognize that the data are wrong by checking the data validity in, e.g., a status register of the memory).

The external microprocessor 104 triggers an unlocking sequence, directed to be granted access right to the protected memory zone and obtain the reading of the data stored in the memory matrix 106 in the location(s) corresponding to the specified address add. In particular, the unlocking sequence is started by the external microprocessor 104 requesting the memory device 102 provide a code, which the microprocessor will use to generate an unlocking password. The memory device for example generate a random number RND (e.g. 64-bit long) and makes it available to the microprocessor 104.

The external microprocessor 104 encrypts the received code *RND* by means of a predetermined encryption algorithm, e.g. a DES (Data Encryption Standard) algorithm, using a predetermined encryption key, obtaining as a result an encrypted code *des_data_crypt*, for example of 64 bits, which is an encrypted version of the code *RND* issued by and received from the memory device 102; the encrypted code *des_data_crypt* will be exploited as an unlock password that the microprocessor 104 provides to the memory device 102 for being granted the necessary access authorization. From now on, for the purposes of the present description, by "encryption process" there is intended in general a process of encrypting and/or decrypting data. Once the encryption of the code *RND* has been completed, the external microprocessor 104 communicates to the memory device 102 that it is ready to convey the unlock password by means of an *unlock_pwd_cmd* command. Subsequently, the external microprocessor 104 sends to the memory device 102 the unlock password *des_data_crypt.*

The memory device 102 decrypts the received password *des_data_crypt* using a suitable decryption algorithm, e.g. the DES algorithm, and a decryption key, which may be stored therein, for example in the memory matrix 106 (preferably in a protected, non-externally accessible area thereof), or in a separate storage area non-accessible to the external user. The decryption of the received password *des_data_crypt* produces a code, *e*.*g*. 64-bit long, which is used by the memory for establishing whether or not the external microprocessor 104 is authorized to access the protected memory zone 108. The external microprocessor 104 is granted access right and allowed to read the data stored in the addressed location(s) of the protected memory zone 108 of the memory matrix 106 if the code obtained by decrypting the password *des_data_crypt* is equal or, generally, corresponds to the previously generated code *RND;* in this case, the memory device 102 unlocks the protected memory zone. This in fact means that the encryption algorithm and encryption key used by the external microprocessor 104 to encrypt the random number *RND* are the same as, or corresponds to those used by the memory device 102 to decrypt the password *des_data_crypt*, and thus the memory device 102 recognizes that the external microprocessor 104 is authorized to read the data stored in the protected memory zone 108 of the memory matrix 106.

After unlocking the protected memory zone 108, the memory device 102 reads the addressed memory cells and makes the requested data available to the external microprocessor 104.

The dialoguing sequence described above guarantees a significant security, because a protected memory zone is not unlockable by whichever external device (i.e., it cannot be rendered freely accessible), but only by authorized ones, having been provisioned of the necessary right, in particular in term of tools (algorithm, key) for encrypting codes sent by the memory.

Referring now to Figure 2, a simplified functional blocks diagram of the memory device 102 according to an embodiment of the present invention is illustrated. It is to pointed out that only the functional blocks involved in a reading operation on the memory device are shown, and, for simplicity of the drawing, signals and corresponding physical lines carrying them are denoted with the same reference numerals.

The memory device 102 interacts with the external environment by means of a plurality of data input/output (I/O) pads 202, for receiving/outputting data (and command codes), and of address pads 203, for receiving address codes adapted to select location, i.e., memory cells in the memory matrix 106. The pads 202 and 203 are connected to an input block 204, including input buffers for the addresses and the data. The input block 204 is connected, by means of a bus of lines identified as *command* in the drawing, to a Command User Interface (CUI) 205; over such bus, a generic command received by the memory (for example, from the external microprocessor 104) is conveyed to the CUI 205, which decodes the command so as to determine a proper operations sequence; among the others, the CUI receives and decodes the command *unlock_pwd_cmd* sent by the external microprocessor 104, when it is ready to send the password *des_data_crypt* to the memory device 102. The memory device may include further pads, particularly an OEN (output enable) pad (in the drawing indicated as part of the pads 203), for receiving an output enable command from an external memory controller, such as the external microprocessor 104; also the pad OEN is connected to the input block 204, which regenerates the output enable signal and provides an internal output enable signal *oe_n*.

The memory matrix 106 includes a plurality of memory cells (not shown in the drawing) arranged in rows and columns, controlled by bit lines and word lines, respectively. A decoder and selector block 210 receives from the input block 204 the address add corresponding to the memory cells that are to be read, and selects them by means of wordline selection signals *w1* and bitline selection signals bl. The selected bitlines (normally, a packet of, e.g., eight or sixteen or more bit lines is selected at a time, depending on the degree of parallelism of the memory) are connected to a sense amplifier block 212. The sense amplifier block 212 receives memory cell current values corresponding to the states of the selected memory cells, and provides an amplified full-logic version thereof to a data output block 214, that is connected to the outside by means of the input/output pads 202.

Typically, the memory device 102 and the external microprocessor 104 exchange data through a bus, e.g. of 16 lines. Consequently, codes made up of more than 16 bits, e.g. the 64-bit code RND and the 64-bit unlock password *des_data_crypt*, are for example received in four steps, i.e. in chunks of 16 bits per step.

The memory device 102 includes a code generator, particularly a random number generator block 245, for generating the code, e.g. the 64-bit random number *RND* used during the dialoguing sequence 100 between the memory device 102 and the external microprocessor 104, and a 64-bit latches block 248, connected to the random number generator block 245, whose purpose is to temporarily store the random number *RND.*

The memory device 102 further includes a lock/unlock block 234, adapted to manage the protection of the memory zones 108 and to allow/inhibit access thereto according to their protection status. In particular, the lock/unlock block 234 is adapted to check if a received address *add* corresponds (i.e., falls in a range of addresses corresponding) to a protected memory zone 108, and in the affirmative case to inhibit the access to the data stored in the addressed memory cells, for example by controlling the output block 214 so as to selectively enable/disable the transfer of the read data from the sense amplifier 212 to the input/output pads 202.

As already pointed out before, when the external microprocessor 104 sends the *unlock_pwd_cmd* command, the CUI 205 decodes it, and asserts a signal *load_data_crypt* to a 64-bit latches block 220, connected to the input block 204 through a bus of, e.g., 16 lines, whose purpose is to reconstruct and temporarily store the password *des_data_crypt* received from the external microprocessor 104 in chunks of, e.g., 16 bits. Particularly, the signal *load_data_crypt* allows to store sequentially into the 64-bit latches block 220 the four 16-bit words forming the 64-bit password *des_data_crypt* by exploiting two address bits *add<1:0>*, e.g. the least significant bits, provided by the input block 204. In this way, after four steps, the entire 64-bit password *des_data_crypt* is stored and available in the 64-bit latches block 220.

During the storage of the last 16-bit word of the password *des_data_crypt*, the CUI sends a signal *run_mcr* to an oscillator block 222, adapted to generate a clock signal *clk*, and to an internal microcontroller 228, responsible of the management of the operations necessary to the functioning of the memory device 102. The signal *run_mcr* causes the internal microcontroller 228 and the oscillator block 222 to start. The clock signal *clk* is the time base for the operations of the internal microcontroller 228, and of a DES block 229 including an ensemble of circuital elements (and, possibly, program instructions) adapted to implement the encryption/decryption operations of a DES algorithm.

The internal microcontroller 228 includes a ROM 230, wherein all the instructions necessary to its operation are stored.

After having been started, the internal microcontroller 228 firstly resets a counter block 232, by means of a signal *res_addcnt*. The counter block 232 generates address codes *key add* for addressing the locations of the memory matrix 106 wherein the decryption key necessary to decrypt the password *des_data_crypt* is stored. When the counter block 232 is reset, the decoder block 210 is driven in such a way to cause selection of the first location of the memory matrix 106 wherein the decryption key is memorized; the counter block 232 increments the count to select the successive locations containing the decryption key.

Subsequently, the internal microcontroller 228 asserts a signal *dis_read_out (e.g.,* to the high logic level) provided to the lock/unlock block 234. By asserting the signal *dis_read_out*, the decryption key, read out from the memory matrix 106, is prevented from being made available at the memory device's output pads, and the key is thus rendered invisible from the outside, protecting it from undesired electronic piracy acts. There is no way or path for drive the decryption key out of the memory device, because it is readable only by the internal microcontroller thereof.

At this point, the internal microcontroller 228 asserts a signal *read_key* (e.g., active high) to the decoder block 210, thereby activating it, to start the reading of the decryption key. A latches block 236 is provided for storing the decryption key read out from the memory matrix 106. The latches block 236 is activated by a signal *load_key*, generated by the internal microcontroller 228. As in the case of the password *des_dala_crypt* received from the outside, the decryption key (e.g., 64 bits long) may be read out and stored in the latches block 236 in more than one step. Particularly, the counter block 232 is sequentially incremented by means of a signal *in_cnt*, provided by the internal microcontroller 228, in such a way to cause the decoder block 210 to select in succession the locations of the memory matrix 106 wherein the different portions of the key are memorized. Each portion of the key is sequentially conveyed to the latches block 236 through a bus of lines *data_key, e*.*g*. of 16 lines, connecting the sense amplifier block 214 to the latches block 236. As in the case of the password des_data_crypt, the latches block 236 operates by means of values taken by a code *add int<1:0>* (e.g., of 2 bits) provided by the counter block 232, and corresponding for example to the least significant bits of the address of the locations storing the key. When the last portion of the decryption key stored in the memory matrix 106 has been read out and loaded into the latches block 236, the counter block 232 signals it to the internal microcontroller 228, by asserting a signal *last_add*.

Responsive to the signal *last_add*, the internal microcontroller 228 activates the DES block 229, asserting a signal *rst_global_n* (e.g., to the high logic value).

Under the control of the internal microcontroller 228, the DES block 229 loads the decryption key and the password *des_data_crypt* In particular, the internal microcontroller 228 then asserts a signal *key_req* to cause the DES block 229 load the decryption key stored in the latches block 236, and asserts a signal *des_req* to cause the DES block 229 load the password *des_data_crypt* stored in the latches block 220.

Once the decryption key and the password *des_data_crypt* have been loaded, the DES block 229 starts a decryption process, during which the internal microcontroller 228 and a comparator block 240 are set in a "waiting" state. The decryption process produces a *(e.g.,* 64-bit) code *des_data_decrypt* representing a decrypted version of the unlock password; in particular, in the exemplary embodiment of the invention herein described, such a decryption process includes decrypting the received encrypted password *des_data_crypt* using the decryption key according to a sequence of mathematical operations implementing the DES algorithm. When the decryption process ends, the DES block 229 notifies the internal microcontroller 228 and the comparator block 240 by asserting a signal *des_status* (e.g., at the high logic value). The decrypted password *des_data_decrypt*, generated by the decryption process, is subsequently fed to the *(e.g.,* 64-bit) comparator block 240. Then, the internal microcontroller 228 resets the DES block 229, by deasserting a signal *rst_global (e.g.,* to the low logic value).

The comparator block 240 also receives the random number RND stored in the latches block 248.

The comparator block 240 compares the decrypted password *des_data_decrypt* and the random number *RND.* If the decrypted password *des_data_decrypt* coincides with the random number RND, the comparator block 240 asserts (to the high logic value) a signal *data_decrypt_eq_rnd* to inform the internal microcontroller 228 of the successful outcome of the comparison. The memory device has in this way ascertained that the external microprocessor 104 possesses the correct encryption key, equal or corresponding to the key used by the DES block 229 included in the memory device 102. In this case, the internal microcontroller 228 asserts, e.g. to the low logic value, a signal *pwd_unlock*, that is normally kept deasserted, thus instructing the lock/unlock block 234 to drive the output block 214 so as to enable the data transfer from the sense amplifier block 212 to the input/output pads 202. The external microprocessor 104 is thus authorized to read the data stored in the protected memory zone 108, in particular data stored in the location(s) corresponding to the address add..

If instead the signal *data_decrypt_eq_rnd* is set to the low logic value, meaning that the number *des_data_decrypt* and the random number RND are not equal, the memory device 102 preferably signals to the external microprocessor 104 that the unlock request has not been successful, for example by issuing a *fail* code (not shown in the figures) sent to the external microprocessor 104. In this case the signal *pwd_unlock* is kept deasserted, so the lock/unlock block 234 continues to inhibit the data transfer by the output block 214 from the sense amplifier block 212 to the input/output pads 202. This situation may typically arise in case the external microprocessor 104 does not have the authorization to obtain the reading of the data stored in the memory matrix 106 corresponding to the address add, not possessing the correct encryption key. Another situation in which this may occur is a possible corruption of the exchanged data (code RND, unlock password) between the memory device and the external microprocessor, for example due to disturbs. The external microprocessor 104 may retry (preferably, for a limited number of times) to be granted the read access authorization to the memory matrix 106, repeating the unlocking process (for example, requesting a new code *RND* from the memory device 102).

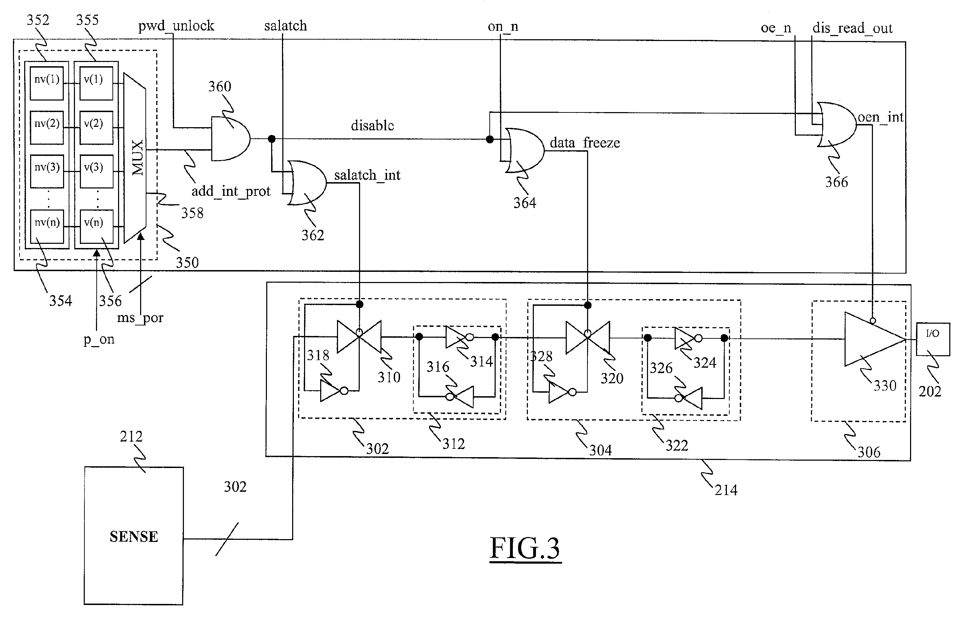

The output block 214 and the lock/unlock block 234 will be now described in greater detail referring to Figure 3 according to an embodiment of the present invention.

The output block 214 is connected to the sense amplifier block 212 and to the input/output pads 202. The output block 214 also receives three further logic signals from the lock/unlock block 234: a signal *salatch_int*, a signal *data_freeze*, and a signal *oen_int*. The lock/unlock block 234 interacts with the output block 214 by means of these three signals, in such a way to selectively enable the data transfer to the input/output pads 202.

The output block 214 includes three sub-blocks 302, 304, 306 receiving the signal *salatch_int*, the signal *data_freeze*, and the signal *oen_int*, respectively.

It has to be noted that the bus connecting the sense amplifier block 212 to the input/output pads 202, is typically composed by a plurality (e.g., 16) of signal lines, each one conveying a single bit of a read data word. Consequently, each one of the three sub-blocks 302, 304, 306 is to be intended as replicated a proper number of times, e.g. 16 times.

The sub-block 302 includes a transmission gate 310, having an input terminal connected to the sense amplifier block 212 and an output terminal connected to the input of a latch 312, for example formed by two logic NOT ports 314, 316. According to the shown example, the transmission gate 310 is of a complementary driving type (adapted to efficiently transfer both high and low logic values). An active-low control terminal receives the signal *salatch_int*, while an active-high control terminal receives the logic complement of the signal *salatch_int*, provided by a further logic NOT port (a logic inverter) 318 receiving the signal *salatch_int*.

Similarly to the sub-block 302, the sub-block 304 includes a transmission gate 320, having an input terminal connected to the output of the latch 312 and an output terminal connected to the input of a further latch 322 (constituted by two logic NOT ports 324, 326). The active-low control terminal of the transmission gate 320 receives the signal *data_freeze*, while the active-high control terminal receives the logic negation of the signal *data freeze,* provided by a further logic NOT port 328 receiving the signal *data_freeze*.

The sub-block 306 includes a three-state output buffer or driver 330, whose output terminal (that is, the terminal connected to the respective input/output pads 202) can be switched to high-impedance. Particularly, the output buffer 330 has an enable/disable terminal (active low) receiving the signal *oen_int*. Consequently, when the signal *oen_int* takes a high logic value, the output terminal connected to the input/output pads 202 is set to high impedance. On the contrary, the data can be conveyed to the input/output pads 202 when the signal *oen_int* takes a low logic value.

When the signal *salatch_int* assumes a high logic value, the transmission gate 310 blocks the transfer of data from the sense amplifier block 212 to the output buffer 330. In this case, the data which is provided to the input of the sub-block 304 is the one previously stored in the latch 312. On the contrary, when the signal *salatch_int* takes a low logic value, the transmission gate 310 is made conductive, and the data coming from the sense amplifier block 212 are latched into the latch 312, and can reach the sub-block 304.

In the same way, when the signal *data_freeze* assumes a high logic value, the transmission gate 320 is not conductive, blocking the transfer of data from the sub-block 302 to the output buffer 330. In this case, the data which is provided to the input of the output buffer 330 is the one previously stored in the latch 322. On the contrary, when the signal *data_freeze* takes a low logic value, the transmission gate 320 is made conductive, and the data coming from the sub-block 302 are latched into the latch 3222, and can reach the input of the output buffer 330.

The lock/unlock block 234 includes a protection indicator structure 350, adapted to store indications of protection of the different memory zones 108 of the memory matrix 106. The protection indicator structure 350 includes a non-volatile register 352 comprising a first plurality of non-volatile memory elements 354 (for example, flash cells), and a volatile register 355 comprising a second plurality of volatile memory elements 356 (for example, latches); the number of volatile memory elements 356 in the second plurality corresponds, in particular it is equal, to the number of non-volatile memory elements 354 in the first plurality. Each non-volatile memory element 354 belonging to the non-volatile register 352 is coupled to a corresponding volatile memory element 356 belonging to the volatile register 355; the volatile register 355 is adapted to load a status stored in the non-volatile memory elements 354 in response to a signal *p_on* generated at each power-on of the memory device (for example, by a power-on reset circuitry) and each time the state of even a single one of the non-volatile memory elements 354 is modified. The protection indicator structure 350 further includes a multiplexer block 358 having a plurality of input lines, each one connected to a corresponding volatile memory element 356, and receives from the input block 204 an address portion *ms_por*, including part of the bits of the address add, in particular including the most significant bits, identifying the different memory zones. The multiplexer block 358 has an output line providing a logic signal *add_int_prot* to an input terminal of a two-inputs logic AND gate 360.

The logic AND gate 360 has another input terminal receiving the signal *pwd_unlock*, provided by the internal microcontroller 228. The logic AND gate 360 has an output terminal providing a signal *disable* to an input terminal of three logic OR gate 362, 364, 366.

The two-inputs logic OR gate 362 has another input terminal receiving a signal *salatch*, generated by a an internal readpath control logic indicated as 270 in Figure 2 and responsible of managing the timing of the read operations, particularly the sense amplifier block 212 and the output block 214, and an output terminal providing the signal *salatch_int* to control the transmission gate 310.

The two-inputs logic OR gate 364 has another input terminal receiving a signal *on_n* provided by internal readpath control logic 270, and an output terminal providing the signal *data_freeze* to control the transmission gate 320.

The three-inputs logic OR gate 366 has an input terminal receiving the signal *dis_read_out* from the internal microcontroller 228, a further input terminal receiving the signal *oe_n* from input buffer connected to pad OEN, and an output terminal providing the signal *oen_int* to the output buffer 330.

The signal *salatch* is asserted low in order to load into the latch 312 a data coming from the output terminal of the sense amplifier block 212, for the subsequent transfer to the output buffer 330.

The signal *on_n* is asserted low in order to load into the latch 322 the data previously latched in the latch 312; this makes it possible to load into the latch 312 a new, successive data ready at the output terminal of the sense amplifier block 212.

The signal *oe_n* is asserted low in order to allow transferring the data previously latched in the latch 322 to the input/output pads 202; this makes it possible to load into the latch 322 the data previously latched in the latch 312.

Turning to the protection indicator structure 350, the number of non-volatile memory elements 354 and of volatile memory elements 356 is equal to the number n of memory zones 108 in which the memory matrix 106 is divided. Each such zone 108 is formed by a respective plurality of memory cells (the different memory zones 108 may have equal or different sizes, and thus they may include same or different numbers of memory cells), and can be either a protected zone, whereby if the external microprocessor 104 request a reading, the memory zone needs to be preliminary unlocked (as described in the dialoguing sequence 100), or it can be an unprotected zone, freely accessible at least in reading. In particular, an information stored in one of the non-volatile elements 354 determines if the corresponding memory zone 108 is protected or not. Each non-volatile memory element 354 stores a single information bit: if the bit value is "1" (high logic value), the corresponding zone 108 of the memory matrix 106 is protected and access thereto (at least in reading) necessitates unlocking operations, otherwise (bit value equal to "0", low logic voltage) the memory zone is unprotected.

At the memory device power on (and each time the state of even a single one of the non-volatile memory elements 354 is changed, the signal *p_on* is asserted to load the information stored in the non-volatile memory elements 354 into the corresponding volatile memory elements 356. In this way, the protection information bit is readily available for subsequent accesses.

The multiplexer block 358 selects one input line among the others n according to the portion *ms_por* of the address add received by e.g. the external microprocessor 104, and provides to the AND logic gate 360 the logic value stored in the corresponding volatile memory element 356 by means of the signal *add_in_prot*. The address add of each memory cell belonging to a same zone 108 has the same address portion *ms_por* value. Consequently, different memory zones 108 are identified by different values of the address portion *ms_por*.

Referring again to the dialoguing sequence 100, when the external microprocessor 104 executes the *read(add)* operation, the multiplexer 358 receives the address portion *ms_por* of the address *add,* and consequently the signal *add*_*int_prot* takes a high value (protected zone 108) if the bit stored in the corresponding volatile memory element 356 is "1", or a low value (unprotected zone 108) if the bit stored in the corresponding volatile memory element 356 is "0".

When the signal *add_int_prot* takes the low logic value, the signal *disable* is low. Consequently, the signal *salatch_int* assumes the same logic value as the signal *salatch*, the signal *data_freeze* takes the same logic value as the signal *on_n*; the signal *oen_int* assumes a logic value given by the logic OR operation between the two signals *oe_n* and *dis_read_out*.

When the signal *add_int_prot* takes the high logic value, the logic value assumed by the signal *disable* depends on the logic value assumed by the signal *pwd_unlock*. Particularly, if the logic value assumed by the signal *pwd_unlock* is high, the signal *disable* is high as well. Consequently, the signals *salatch_int*, *data freeze* and *oen int* assume the high logic value, irrespective of the logic values assumed by the signals *salatch, on_n* and *oe_n;* the data are not available at the input/output pads 202, thus the external microprocessor 104 can not read the data stored in the addressed memory cells. If the internal microcontroller 228 sets the signal *pwd_unlock* to the low logic value as a result of an unlocking operation, the signal *disable* assumes the low logic value, and the availability of the data stored in the addressed memory cells at the input/output pads 202 depends on the logic values assumed by the signals *salatch, on_n* and *oe_n*, as in the case an unprotected zone 108 is accessed. The signals *salatch, on_n* are driven by internal readpath control logic 270 according to a predetermined timing taking into account the evolution of the read operations.

Similar considerations apply if the output block 214 or the lock/unlock block 234 are implemented in different ways. In particular, the concepts of the present invention are also applicable when the output block 214 includes only one or two sub-blocks between the 302, 304, 306 ones, or the lock/unlock block 234 includes different logic gate absolving the same purposes.

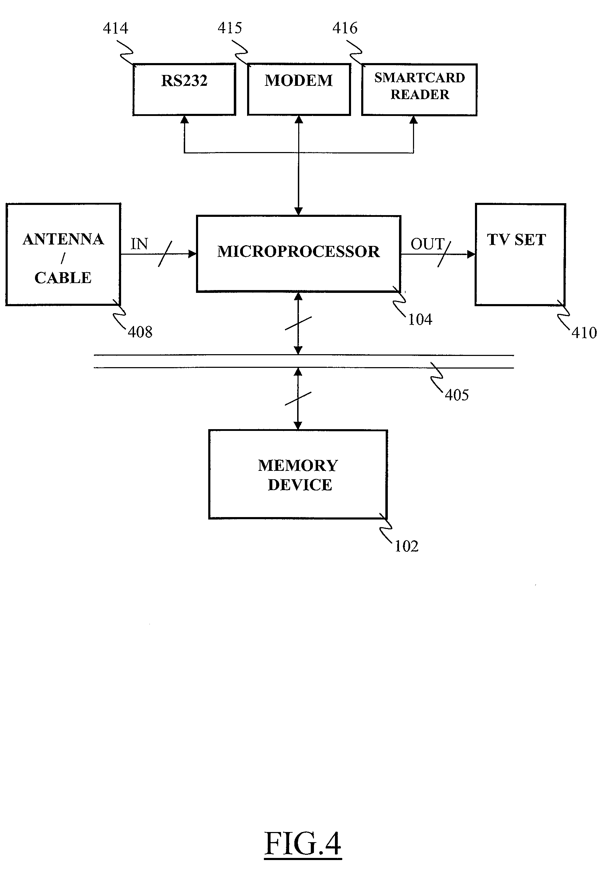

Referring to Figure 4, an exemplary application of the present invention is illustrated. In particular, Figure 4 shows a simplified block diagram of an electronic system, for example a set-top box apparatus adapted to cable or satellite or digital terrestrial television, or a DVD player/recorder, or a mobile communications terminal.

The memory device 102 interacts with the external microprocessor 104 by means of a bus of lines 405. The external microprocessor 104 includes an input terminal for receiving, for example, a TV signal *IN* provided by an antenna or a TV-cable 408, and an output terminal for providing, for example, a TV signal OUT to a TV set 410. The external microprocessor 104 is also connected to a plurality of communication ports, for example a serial port RS232 414, a modem device 416, and a smartcard reader 416. The system may include other peripherals, such as one or more RAM modules, human interface devices (e.g. a keyboard, a display device, a loudspeaker, remote-control input port).

According to the proposed access protocol, it is possible to protect reserved code/data stored in the memory device 102 from unauthorized reading. Referring for example to a DVD classic consumer system, the memory device 102 may store in a protected zone thereof the instructions of a new and efficient algorithm of compression which could give advantages in speed or cost of the system. Given that the same memory device 102 may be used in different DVD systems, it is necessary to shield the data stored therein in an effective way. In the application of set-top box, the security features provided by the present invention give the advantage to protect reserved information made available at the system by a service provider. In this case, the additional security provided makes it more difficult an unauthorized copying of firmware, thus protecting the interests of the service provider itself.

It is pointed out that several alternatives to the embodiment described are possible. For example, the memory device may generate the code, e.g. the random number, and encrypt it, and then send the encrypted code to the external microprocessor; the external microprocessor has then to decrypt the received encrypted code and send back the decrypted code to the memory, which then performs a comparison between the generated code and the received code. Stated more generally, at least two encryption processes are performed on a code, e.g. on the random number generated by the memory device, one process at the memory device and another process at the external device wishing to be granted access thereto.

Reassuming, a method and architecture described in the foregoing allow restricting the access, at least in reading, to selected memory zones. The architecture exploits a control logic, e.g. a microcontroller embedded in the memory device, in order to manage an unlock protocol based on the exchange of a code, particularly a random number, which is then properly encoded. The architecture calls for using of a random number generator, of an encryption/decryption system, and a system adapted to inhibit the transfer of data stored in the memory to the outside in the case access to protected memory locations is attempted without having the necessary access rights.

Naturally, in order to satisfy local and specific requirements, a person skilled in the art may apply to the solution described above many modifications and alterations all of which, however, are included within the scope of protection of the invention as defined by the following claims.

## Claims

1. A memory device (102) including:
at least one storage area (108) for storing data;
a protection control structure (234) adapted to selectively allow an external device (104) access to the at least one storage area of the memory, the storage area being not freely accessible by the external device if protected;
a control logic (205,228) adapted to identify an access request by the external device to the at least one storage area and cooperating with the protection control structure for managing an unlock procedure for selectively granting the external device at least temporary access rights to the storage area if protected;
means for providing a first code *(RND)* to the external device in said unlock procedure;
means for receiving a second code from the external device in response to said first code;
means for verifying (240,229) validity of the received second code, wherein said means for verifying validity are adapted to ascertain a correspondence of the second code with the first code based on a predetermined relationship;
said control logic instructing the protection control structure to grant access to the storage area if the validity of the received second code has been verified.

2. The memory device of claim 1, further including:
encryption means (229) adapted to perform at least one encryption process on at least one among said second code, to obtain a third code (*des_data_decrypt*), or a fourth code, to obtain the first code.

3. The memory device according to claim 2, in which said means for verifying includes means (240) for comparing the third code with the first code, or the second code with the fourth code, and for providing a comparison result (*data_decrypt_eq_rnd*),
said control logic instructing the protection control structure to grant access to the storage area based on said comparison result.

4. The memory device according to claim 2 or 3, in which said encryption means includes an encryption block (229) for performing the encryption process exploiting the second code and a predetermined encryption key.

5. The memory device of claim 4, in which said encryption key is stored in the memory device, particularly in the at least one storage area thereof.

6. The memory device of any one of the preceding claims, in which said means for providing the first code includes a code generator, particularly a random number generator adapted to generate a random number.

7. The memory device of any one of the preceding claims, in which said protection control structure includes a protection indication storage structure (350) comprising a non-volatile part (352), for storing in non-volatile way protection indications in respect of the at least one storage area.

8. The memory device of claim 7, in which the protection indication storage structure comprises a volatile part (355) associated with the non-volatile part and adapted to be loaded with the protection indications stored in the non-volatile part.

9. The memory device according to any one of the preceding claims, in which said at least one storage area includes at least two storage areas (108), said protection control structure being adapted to control the access to each storage area individually.

10. The memory device of any one of the preceding claims, further including:
output terminals (202) for transferring data to the external device; and
an output block (214), controlled by the protection control structure, for selectively making the data stored in the at least one storage area available at the output terminals according to said comparison result.

11. The memory device of claim 10, wherein the protection control structure controls the output block to make the data stored in the at least one storage area available at the output terminals if the validity of the second code is ascertained.

12. An access protocol (100) to allow access to a memory device (102) by an external device (104), the access protocol including :
receiving at the memory device an access request to a selected storage area by the external device;
in case the selected storage area is not a freely accessible area, performing an unlock procedure including:
having the memory issuing to the external device a first code *(RND);*
at the external device, receiving the first code and, responsive thereto, sending to the memory device a second code depending on the first code;
at the memory device, at least temporarily unlocking the selected storage area to allow access thereto by the external device based on the received second code.

13. The access protocol of claim 12 further including:
at the external device, performing a first encryption process on the first code to obtain the second code,
wherein said at least temporarily unlocking includes performing at least one second encryption process on at least one among said second code, to obtain a third code (*des_data_decrypt*), or a fourth code, to obtain the first code.

14. The access protocol of claim 13, in which said performing at least one second encryption process includes:
performing the at least one second encryption process on the received second code to obtain a third code (*des_data_decrypt*), and temporarily unlocking conditioned by a comparison of the third code to the first code.

15. The access protocol of claim 14, wherein said allowing the external device accessing the selected storage area includes establishing an identity of the third code to the first code.

16. The memory device of claim 13, in which said temporarily unlocking is conditioned by a comparison of the received second code with a fourth code, said fourth code being used by the memory device for generating the first code by performing the at least one second encryption process.

17. The access protocol according to any one of the claims from 13 to 16, in which said performing the first encryption process includes exploiting a predetermined first encryption key.

18. The access protocol according to claim 17, in which said performing the at least second encryption process exploiting a predetermined second encryption key.

19. The access protocol according to claim 18, in which said second encryption key is stored in the memory device.

20. The access protocol according to any one of the claims from 12 to 19, in which said issuing to the external device a first code includes generating a random number code.

21. The access protocol of any one of the claims from 12 to 20, wherein said at least temporarily unlocking the selected storage area to allow access thereto includes allowing the external device read a content of the selected storage area.

22. An electronic device adapted to interact with a memory device according to any one of claims 1 to 11, including:
means for issuing an access request to the memory device;
means for receiving the first code from the memory device;
means for generating the second code based on the received first code; and
means for sending the second code to the memory device.

23. An electronic system including:
a memory device adapted to store data, and
at least one external device interacting with the memory device;
wherein the memory device is according to any one of the claims from 1 to 11, and the external device is according to claim 22.
